# EUROPÄISCHE PATENTSCHRIFT

(11) **EP 2 463 097 B1**
(45) Veröffentlichungstag und Bekanntmachung des Hinweises auf die Patenterteilung: **18.03.2015**
(21) Anmeldenummer: 11188438.3
(22) Anmeldetag: 09.11.2011
(51) Int. Cl.: B32B 37/02, B32B 37/12, B32B 38/00, B41M 7/00

(54) **Spotkaschierung mit Folie**
Spot lamination with film
Habillage de spot à l'aide d'un film

(30) Priorität: 07.12.2010 DE 102010053655
(43) Veröffentlichungstag der Anmeldung: 13.06.2012
(73) Patentinhaber: Heidelberger Druckmaschinen AG, 69115 Heidelberg (DE)
(72) Erfinder: Jurkewitz, Manfred, 69168 Wiesloch (DE); Rautert, Jürgen, 69126 Heidelberg (DE); Sonnenschein, Joachim, 64367 Mühltal (DE); Weber, Alexander, 69469 Weinheim (DE)

(56) Entgegenhaltungen:
- EP-A1- 1 318 013
- WO-A1-2008/118424
- WO-A2-2006/113830
- DE-A1-102005 062 396
- US-A- 6 030 474
- US-A1- 2003 136 503
- US-A1- 2007 102 104

## Beschreibung

Die vorliegende Erfindung betrifft ein Verfahren, eine Vorrichtung sowie eine Verbundfolie zur Verwendung in einem entsprechenden Verfahren zum Laminieren von Substrat, wobei das Substrat einem Laminierwerk zugeführt wird, das Laminierwerk wenigstens einen Laminierzylinder und einen Gegendruckzylinder umfasst, welche gemeinsam einen Laminierspalt bilden, dem Laminierspalt eine Laminierfolie zugeführt wird, die gemeinsam mit dem Substrat durch den Laminierspalt geführt wird und wobei im Laminierspalt die Laminierfolie unter Druck auf das Substrat übertragen wird.

Bei der Verarbeitung von Substraten, vorzugsweise Bedruckstoffen, wie z. B. Papier in Form von Bogen oder Rollen, ist es häufig vorgesehen, den Glanz des Bedruckstoffes wenigstens bereichsweise oder beispielsweise über einen gesamten Bogen zu erhöhen oder einen schon bedruckten Bedruckstoff gegen weitere äußere Beeinträchtigungen zu schützen.

Aus der US 6030474 A ist es bekannt Karten wie beispielsweise Kreditkarten oder Ausweiskarten mit einem Schutzfilm zu versehen, der die gedruckten Informationen auf der Karte schützt.

Um den Glanz zu erhöhen und / oder um den Bedruckstoff selber zu schützen, ist es bekannt, innerhalb einer Druckmaschine eine Lackschicht auf den Bedruckstoff zu übertragen. Bei der Verwendung bzw. bei dem Auftrag solch einer Lackschicht sind aber enge Grenzen, was die Dicke der Lackschicht betrifft, gesetzt. Um eine höhere Lackschicht zu erreichen, ist es daher notwendig, zumindest in mehreren Druckwerken hintereinander Lack auf die gleiche Fläche des Bedruckstoffes aufzubringen. Eine solch dicke Lackschicht hat dann auch weitere ungewollte Eigenschaften, wie z. B. ein entsprechend schlechteres Trocknungsverhalten, welches die Qualität des Bedruckstoffes selber mit der Lackschicht weiter negativ beeinträchtigen kann.

Um diese Nachteile einer möglichst dicken Lackschicht zu vermeiden, ist es bekannt, einen Bogen vollflächig zu kaschieren. So ist es aus der DE 44 90 532 C1 bekannt, einer Vorrichtung zum Kaschieren von Bogen geschuppte Bogen zuzuführen und diese mittels einer Laminierfolie vollflächig zu laminieren, wobei in einem der Laminierung nachfolgenden Arbeitsschritt die einzelnen Bogen in Form von Laminaten durch ein Schneidmesser voneinander getrennt werden. Zur Verwendung dieses Verfahrens und dieser Vorrichtung ist allerdings eine extra Laminiervorrichtung bereitzustellen, was zum Einen einen erhöhten Betreuungsgrad, Platzaufwand und auch eine erhöhte Investition in einem Druckbetrieb bedeutet.

Die Aufgabe der vorliegenden Erfindung besteht daher darin, die genannten Nachteile wenigstens zu verringern bzw. ein flexibleres Verfahren und eine entsprechende Vorrichtung vorzustellen, welche einen entsprechenden Schutz und / oder höheren Glanz für einen Bedruckstoff bzw. ein Druckprodukt ermöglichen.

Diese Aufgabe der Erfindung wird gelöst gemäß einem Verfahren nach Anspruch 1, einer Vorrichtung nach Anspruch 5.

Das erfindungsgemäße Verfahren ist dadurch gekennzeichnet, dass die Laminierfolie nicht als alleinstehendes Verbrauchsmaterial, sondern auf einer Trägerfolie bereitgestellt ist. Die Laminierfolie bildet dann gemeinsam mit der Trägerfolie eine Verbundfolie, welche auf einer Vorratsrolle bereitgestellt wird.

Bei dieser Verbundfolie kann insbesondere zwischen der Laminierfolie und der Trägerfolie eine Trenn- und / oder Kleberschicht vorgesehen sein. Durch eine Trennschicht kann zumindest das Ablösen der Laminierfolie von der Trägerfolie zum Übertragen auf ein Substrat bzw. Bedruckstoff wenigstens unterstützt werden. Eine ggf. vorgesehene Kleberschicht zwischen der Laminierfolie und der Trägerfolie kann dagegen das Anhaftverhalten der Laminierfolie an der Trägerfolie vor dem Laminieren des Bedruckstoffes begünstigen.

Die aus der Laminierfolie und der Trägerfolie bestehende Verbundfolie wird durch einen Laminierspalt hindurch transportiert. Dieser Laminierspalt wird durch einen Laminierzylinder und einen Gegendruckzylinder gebildet. In diesem Laminierspalt wird die Laminierfolie wenigstens bereichsweise von der Trägerfolie getrennt und auf die Oberfläche des Substrats übertragen. Die verbrauchte Verbundfolie, die zumindest teilweise nur noch aus der Trägerfolie besteht, wird anschließend einer Foliensammelrolle zugeführt.

Um die Übertragung der Laminierfolie auf das Substrat bzw. den Bedruckstoff zu begünstigen, ist es im Allgemeinen vorgesehen, dass eine Kleberschicht auf der Oberfläche des Substrats und / oder der Laminierfolie aufgetragen wird bzw. aufgetragen ist. Hierfür kann ein Auftragswerk zum Kleberauftrag auf das Substrat und / oder die Laminierfolie dem Laminierspalt vorgeordnet sein. Solch eine Vorordnung eines Auftragswerkes kann z. B. darin bestehen, dass am gleichen Gegendruckzylinder, an dem auch der Laminierzylinder angestellt ist, ein Auftragszylinder des Auftragswerkes so bereitgestellt ist, dass unmittelbar bevor das Substrat in den Laminierspalt transportiert wird, dieses mit Kleber beaufschlagt wird. Auf der anderen Seite kann es sich auch um ein entsprechend dem Laminierzylinder zugeordnetes Auftragswerk handeln, welches analog für den Kleberauftrag auf die Laminierfolie sorgt. In einer alternativen Ausführungsform ist das Auftragswerk vom Laminierwerk getrennt und diesem alleinstehend vorgeordnet.

Das Laminierwerk kann wenigstens eine Vorrats- und / oder Sammelrolle zur Bereitstellung bzw. zur Aufnahme der Verbundfolie aufweisen. Auf diese Art und Weise ist eine flexible Ausführungsform des Laminierwerks, welches als Ganzes auf modular aus einem Basiswerk und einem Laminiermodul, bestehend aus Vorrats- und / oder Sammelrolle bereitgestellt ist, vorgesehen.

Erfindungsgemäß ist es vorgesehen, dass als Laminierfolie eine vernetzte stabile selbsttragende Folie verwendet wird. Solch eine selbsttragende, stabile und vernetzte Folie kann im Gegensatz zu pulverartigen oder körnigen Schichten wesentlich stabiler ausgebildet sein. Insbesondere kann eine entsprechende Dicke der Folie gewährleistet sein, die einen vorgesehenen Schutz für den Bedruckstoff bildet.

In einer erfindungsgemäßen Weiterbildung der Erfindung ist es vorgesehen, dass eine Schneideinrichtung zum Schneiden der Laminierfolie zwischen der Vorratsrolle und dem Laminierspalt bereitgestellt ist. Mittels dieser Schneideinrichtung können Quer- und / oder Längsschnitte in der Laminierfolie ermöglicht werden. Auf diese Weise können einzelne Bereiche der Laminierfolie auf der Trägerfolie so ausgeschnitten bzw. isoliert werden, dass diese alleine auf das Substrat übertragen werden können, wenn eine entsprechende Kleberbeschichtung auf diesem ausgeschnittenen Bereich bzw. auf dem entsprechenden Bereich des Substrats vorgesehen ist.

Insbesondere ist vorgesehen, dass diese Schneideinrichtung ausschließlich in die Laminierfolie ein bzw. diese durchschneidet, ohne die Trägerfolie selber zu beschädigen. Hierfür kann vorteilhafter Weise eine Ansteuerungseinheit zur Ansteuerung der Schneideinrichtung vorgesehen sein. Diese empfängt Information über die Beschaffenheit und / oder die Dicke der Laminierfolie. Auf diese Weise kann sie die Schneideinrichtung ansteuern und die Schneidtiefe der Schneideinrichtung so bestimmen, dass ein Abhängigkeit von der Beschaffenheit und oder Dicke der Laminierfolie das Schneiden durch die Schneideinrichtung so durchgeführt wird, dass die Laminierfolie geschnitten wird, ohne dass die Trägerfolie selber durch das Schneiden beschädigt wird.

Alternativ oder zusätzlich kann die Ansteuerungseinheit Daten über das Format und die Position der zu laminierenden Bereiche erhalten. Die Ansteuerungseinheit steuert entsprechend dieser Daten die Schneideinrichtung oder die -einrichtungen an, um die auf das Substrat zu übertragende Laminierfolie format- und positionsabhängig zu schneiden.

Beispiele der Erfindung, aus denen sich auch weitere erfindungsgemäße Merkmale ergeben können, auf die die Erfindung aber nicht beschränkt ist, sind in den folgenden Figuren dargestellt.

Es zeigen:
- Fig. 1: eine Laminiervorrichtung,
- Fig. 2: einen Ausschnitt eines Laminierwerkes mit Auftragseinrichtung,
- Fig. 3: eine alternative Anordnung des Auftragswerkes,
- Fig. 4: den Aufbau einer Verbundfolie,
- Fig. 5: alternative Ausgestaltungen einer Schneideinrichtung,
- Fig. 6: eine perspektivische Ansicht alternativer Schneideinrichtungen,
- Fig. 7: eine Schneideinrichtung zum Längsschneiden und

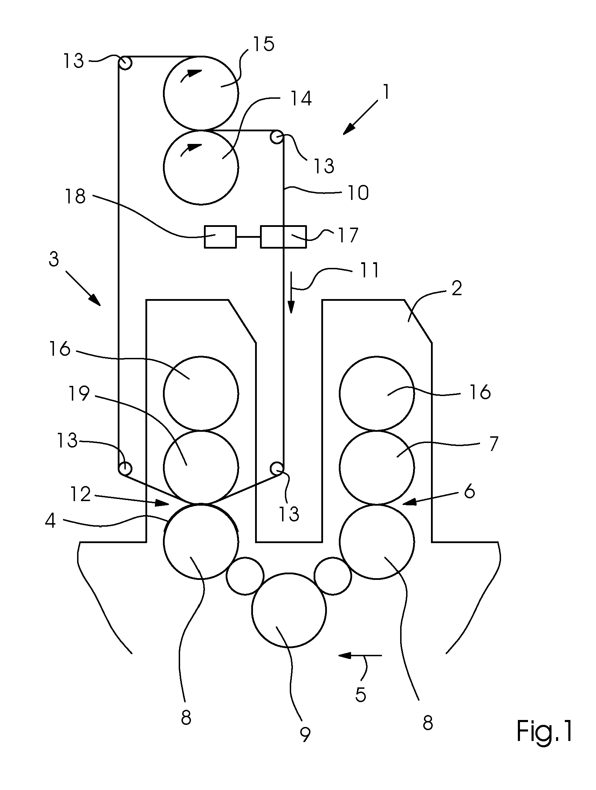

Die Figur 1 zeigt einen Ausschnitt einer Laminiervorrichtung 1 mit einem Auftragswerk 2 und einem Laminierwerk 3.

Durch diese Laminiervorrichtung 1 wird ein Bogen 4 als Substrat in Richtung 5 hindurch transportiert. Bei diesem Transport wird der Bogen 4 zunächst durch einen Druckspalt 6 hindurchgeführt, in dem ein Kleber wenigstens in den Bereichen auf den Bogen 4 aufgebracht wird, in dem anschließend eine Laminierfolie 41 aufgetragen werden soll. Der Druckspalt 6 wird durch einen Gegendruckzylinder 8 und einen Gummituchzylinder 7, der hier als Auftragszylinder fungiert, gebildet. Über einen Plattenzylinder und ein an diesen angestelltes Farbwerk kann über das Auftragswerk 2 wie in einem gewöhnlichen Farbwerk einer Druckmaschine ein Kleber statt Farbe bereichsweise auf den Bogen 4 übertragen werden. Der so mit Kleber beaufschlagte Bogen 4 wird weiter durch die Laminiervorrichtung 1 über einen Transferzylinder 9 in das Laminierwerk 3 transportiert. Im Laminierwerk 3 wird der Bogen 4 durch einen Laminierspalt 12 hindurchgeführt.

Der Laminierspalt 12 wird dabei aus einem Gegendruckzylinder 8 und einem Laminierzylinder 19 gebildet. Bei dem Laminierzylinder 19 kann es sich insbesondere um einen herkömmlichen Gummituchzylinder eines Druckwerkes handeln. Das Laminierwerk 3 kann dabei ein herkömmliches Druckwerk einer Druckmaschine sein.

Mit dem Bogen 4 wird eine Verbundfolie 10 gleichzeitig durch den Laminierspalt 12 hindurchgeführt. Die Verbundfolie 10 wird dafür in Richtung des Pfeils 11 so transportiert, dass ihre Transportrichtung im Laminierspalt 12 der Bewegungsrichtung des Bogens 4 entspricht. Vorteilhafterweise wird durch hier nicht gezeigte Antriebselemente dafür gesorgt, dass die Verbundfolie 10 zumindest zu Zeitpunkten, in denen Laminierfolie 41 auf den Bogen 4 übertragen wird, mit der gleichen Geschwindigkeit wie der Bogen 4 durch den Laminierspalt 12 hindurchbewegt wird. Hierfür wird die Verbundfolie 10 von einer Vorratsrolle 14 abgezogen und über Umlenkrollen 13 zum Laminierspalt 12 geführt. Nach Durchlaufen des Laminierspalts 12 wird die Verbundfolie 10 weiter über Umlenkrollen 13 zu einer Sammelrolle 15 geführt.

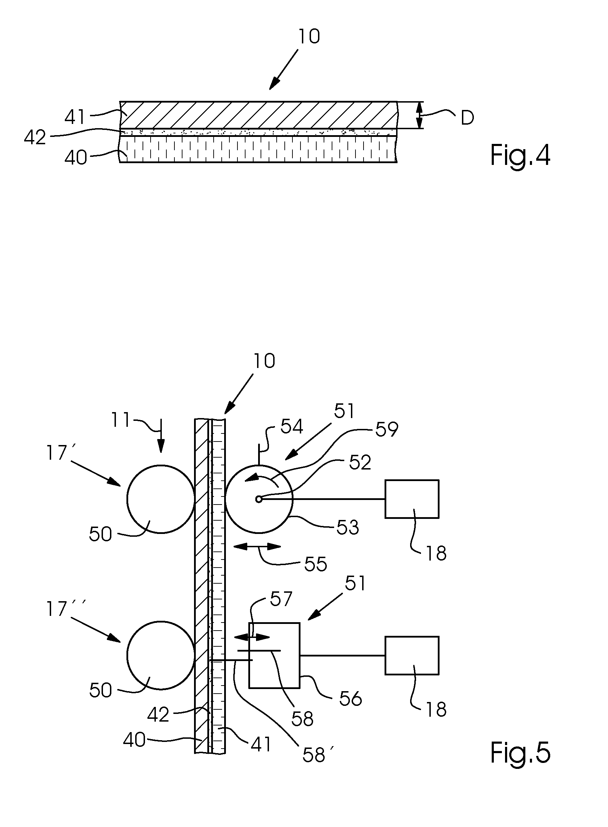

Die Verbundfolie 10 ist, wie in der Figur 4 genauer gezeigt, aus einer Trägerfolie 40, einer Trennschicht 42 und einer Laminierfolie 41 aufgebaut. Die Laminierfolie 41 ist dabei vollflächig auf der Trägerfolie 40 aufgebracht und stellt eine vernetzte, stabile, sich selbst tragende Folie dar. Ohne weitere Vorkehrungen würde durch den aufgebrachten Kleber im Auftragswerk 2 die gesamte Laminierfolie 41 ohne Unterlass auf den Bogen 4 und weitere folgende Bogen 4 übertragen werden. Um eine bereichsweise Übertragung der Laminierfolie 41 auf einen Bogen 4 zu ermöglichen, ist zwischen der Vorratsrolle 14 und dem Laminierspalt 12 eine Schneideinrichtung 17 bereitgestellt. Diese Schneideinrichtung 17 wird durch eine Ansteuerungseinheit 18 so angesteuert, dass in Abhängigkeit von der gewünschten Position und dem gewünschten Format der laminierten Fläche auf dem Bogen 4 die Laminierschicht bzw. die Laminierfolie 41 auf der Trägerfolie so eingeschnitten wird, dass sich gerade solche Segmente aus dem Verbund der Laminierfolie 41 ablösen, die dem gewünschten Format entsprechen. Vorteilhafterweise wird eine Kleberschicht, die exakt dem Format und der Position der gewünschten laminierten Bereiche entspricht, im Auftragswerk 2 über den Gummituchzylinder 7 auf den Bogen 4 übertragen. Hierfür wird vorteilhafterweise eine Druckplatte auf den Druckplattenzylinder 16 eingespannt, die so ausbelichtet ist, dass die Bereiche, die den zu laminierenden Bereichen auf dem Bogen 4 entsprechen, farb- bzw. kleberaufnehmend sind. Als Kleber ist hier insbesondere eine Kleberfarbe zu verstehen, die sowohl farbig als auch farblos sein kann.

Durch die entsprechende Kleberbeschichtung im Auftragswerk 2 zusammen mit dem Einschneiden der Laminierfolie 41 auf der Trägerfolie 40, ohne dass die Trägerfolie 40 selber geschnitten wird, werden bereichsweise Laminierungen ggf. auch über die gesamte Bogenfläche des Bogens 4 ermöglicht.

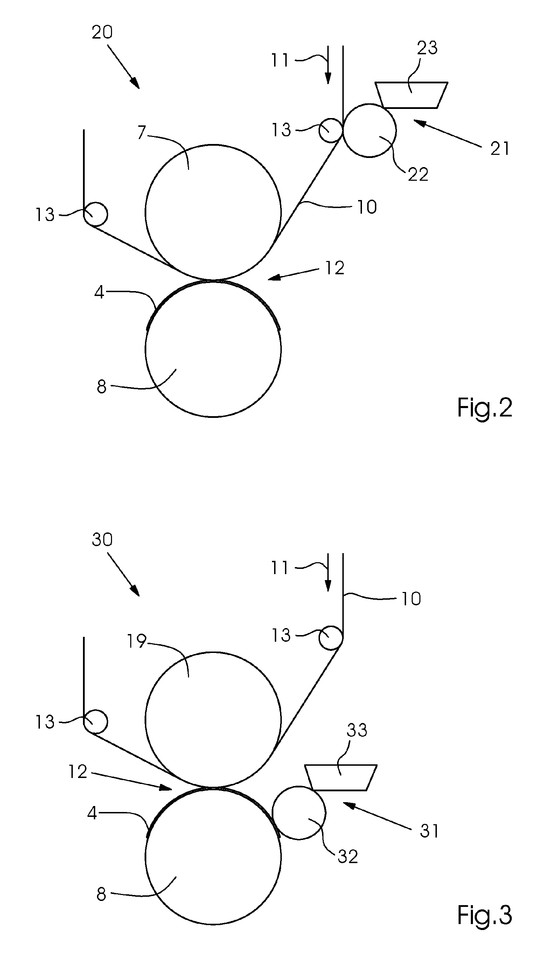

In den Figuren 2 und 3 sind alternative Auftragsmöglichkeiten für den Kleber dargestellt.

In der Figur 2 ist als alternative Möglichkeit gezeigt, dass ein Kleber aus einem Klebervorrat 23 über eine Auftragswalze 22 direkt auf die Oberfläche der Laminierfolie 41 der Verbundfolie 10 aufgetragen werden kann. Hierfür ist ein Auftragswerk 21 im Bereich der Führung der Verbundfolie 10 in Bewegungsrichtung 11 der Verbundfolie 10 vor dem Laminierspalt 12 angeordnet. Eine Umlenkrolle 13 kann dabei insbesondere als Gegenrolle zur Auftragswalze 22 fungieren, so dass der Kleber sauber auf die Oberfläche der Laminierfolie 41 aufgetragen werden kann. Zur Vereinfachung ist in dieser Figur nur der Bereich des Laminierwerks 20 dargestellt, welcher unmittelbar im Umfeld des Laminierspalts 12 liegt.

In einer einfachsten Ausführungsform kann die Auftragswalze 22 so ausgeführt sein, dass immer vollflächig Kleber aus dem Klebervorrat 23 auf die Oberfläche der Laminierfolie 41 aufgetragen wird. Durch entsprechende Querschnitte in der Laminierfolie 41 kann dann eine vollflächige Laminierung des Bogens 4 gewährleistet werden.

In weitergehenden Ausführungsformen kann es vorgesehen sein, dass die Auftragswalze 22 eine Rasterwalze ist, wobei die Rasterverteilung auf der Oberfläche so ausgeführt ist, dass der Kleber nur bereichsweise in gewünschten Bereiche übertragen wird.

Auch die Figur 3 zeigt eine entsprechende alternative Auftragsmöglichkeit für einen Kleber. Hierbei ist ein Auftragswerk 31 direkt an den Gegendruckzylinder 8 angestellt, so dass ein Kleber aus einem Klebervorrat 33 über eine Auftragswalze 32 auf einen Bogen 4, welcher am Gegendruckzylinder 8 transportiert wird, aufgetragen werden kann. Der Laminierspalt 12 folgt dann unmittelbar hinter dem Auftragswerk 31 am gleichen Gegendruckzylinder 8.

Auf diese Weise kann genauso, wie bei der in Figur 2 gezeigten Variante, ein kompakteres Laminierwerk 20, 30 realisiert werden, bei dem der Auftrag des Klebers durch ein Auftragswerk 31, 21, welches im Laminierwerk 20, 30 integriert ist. Ein vorgelagertes Druck- oder Lackwerk braucht dann nicht zum Auftrag des Klebers verwendet zu werden, sondern bleibt für herkömmliche Aufgaben weiterhin verfügbar.

Die Figur 4 zeigt den prinzipiellen Aufbau einer Verbundfolie 10. Auf einer Trägerfolie 40 ist eine Laminierfolie 41, welche zusammenhängend in Form einer vernetzten, stabilen, selbsttragenden Folie ausgebildet ist, angeordnet. Zwischen der Trägerfolie 40 und der Laminierfolie 41 ist eine Trennschicht 42 angeordnet, welche das Ablöseverhalten der Laminierfolie 41 von der Trägerfolie 40 so beeinflusst, dass eine ausreichend stabile Führung der Verbundfolie 10 im Bereich des Laminierwerks 3, 20 oder 30 gewährleistet ist, während sich die Laminierfolie 41 ausreichend gut von der Trägerfolie 40 trennt, um im Laminierspalt 12 auf den Bogen 4 übertragen zu werden.

Die Laminierfolie 41 der Verbundfolie 10 weist eine Dicke D auf. Diese Dicke D kann in weiten Bereichen gemäß den Anforderungen für die laminierte Fläche auf dem Bogen 4 variiert sein. Insbesondere kann die Dicke D der Laminierfolie 41 dicker sein, als eine Lackschicht, welche in einem herkömmlichen Lackwerk auf einen Bogen 4 übertragen werden kann.

Auf diese Weise kann ein stabiler Übertrag von Laminierfolie 41 auf einen Bogen 4 realisiert werden, wobei gleichzeitig eine Spotlaminierung in einzelnen Bereichen eines Bogens 4 möglich ist, die insbesondere in der Dicke D die Möglichkeiten, welche mit herkömmlicher Lackierung erreicht werden können, weit übersteigt.

Die Figur 5 zeigt zwei unterschiedliche Möglichkeiten eines Querschneiders als Schneideinrichtung 17 zum Einschneiden der Laminierfolie 41 der Verbundfolie 10.

Es ist hier ausschließlich der Bereich der Verbundfolie 10 gezeigt, in welchem eine Schneideinrichtung 17 bereitgestellt ist. Die beiden hier dargestellten Schneideinrichtungen 17' und 17" sind jeweils Querschneideinrichtungen, welche die Laminierfolie 41 quer zu ihrer Transportrichtung 11 einschneiden. Diese beiden Schneideinrichtungen 17', 17" können alternativ als Schneideinrichtung 17 und natürlich auch nacheinander geschaltet eingesetzt werden.

Die Schneideinrichtungen 17', 17" weisen auf der Rückseite der Verbundfolie 10, d. h. auf der Rückseite der Trägerfolie 40 jeweils Gegendruckrollen 50 auf, auf welchen die Verbundfolie 10 abläuft. Auf der entgegengesetzten Seite der Verbundfolie 10, d. h. im Bereich der Oberfläche der Laminierfolie 41 sind jeweils Schneidorgane 51 bereitgestellt. Diese Schneidorgane 51 sind jeweils mit Ansteuerungseinheiten 18 verbunden, welche zum Einen die Frequenz, mit welcher in die Laminierfolie 41 eingeschnitten wird, als auch die Tiefe, mit welcher in die Laminierfolie 41 eingeschnitten werden soll, vorgibt. Hierfür sind die Ansteuerungseinheiten 18 außerdem mit hier nicht dargestellten Eingabeelementen verbunden.

Die Schneideinrichtung 17' weist ein rotatives Schneidorgan 51 auf, welches einen Schneidzylinder 53 umfasst, welcher quer zur Transportrichtung 11 der Verbundfolie 10 angeordnet ist. Der Schneidzylinder 53 kann zum Schneiden der Laminierfolie 41 um eine Achse 52, welche ebenfalls quer zur Transportrichtung 11 ausgerichtet ist, in Richtung 59 gedreht werden. In dem hier dargestellten Fall entspricht die Drehrichtung 59 der Transportrichtung 11 der Verbundfolie 10, da hier insbesondere bei einer gleichartigen Geschwindigkeit der Verbundfolie 10 und des Schneidzylinders 53 während des Schneidens in die Laminierfolie 41 eine Zerstörung oder Beschädigung der Laminierfolie 41 im Wesentlichen vermieden werden kann. Wird nicht geschnitten, so kann die Winkelgeschwindigkeit insbesondere in Abhängigkeit von der zu schneidenden Fläche variiert werden.

Zum Schneiden in die Laminierfolie 41 weist der Schneidzylinder 53 eine achsparallel angeordnete Klinge 54 auf. Die Breite der Klinge 54 kann dabei insbesondere so gewählt werden, dass sie der größten möglichen Dicke D der Laminierfolie 41 entspricht, welche möglicherweise Verwendung findet. Insgesamt kann die Klinge 54 auch austauschbar bereitgestellt sein, so dass je nach Dicke D der Laminierfolie 41 unterschiedlich breite Klingen 54 in den Schneidzylinder 53 eingebracht werden können.

Um auf einfache Art und Weise an unterschiedliche Dicken D der Laminierfolie 41 angepasst zu werden, ist es vorgesehen, dass der Schneidzylinder 53 durch die Ansteuerungseinheit 18 in Richtung des Doppelpfeils 55 in Richtung zur Verbundfolie 10 und von ihr weg bewegbar angeordnet ist. Hierfür kann insbesondere die Achse 52 der Schneidzylinder 53 entsprechend in beweglichen Lagern angeordnet sein. Auf diese Weise kann je nach Beabstandung der Schneidzylinder 53 von der Oberfläche der Laminierfolie 41 unterschiedliche Schneidtiefen in die Verbundfolie 10 realisiert werden. Die Schneidtiefen können dabei jeweils so eingestellt werden, dass ausschließlich die Laminierfolie 41 und nicht die Trägerfolie 40 geschnitten wird.

Die alternative Schneideinrichtung 17" weist statt eines Schneidzylinders 52 einen Schneidkasten 56 als Schneidorgan 51 auf. Auch dieser Schneidkasten 56 ist analog, wie der Schneidzylinder 53 mit der Ansteuerungseinheit 18 verbunden. Innerhalb des Schneidkastens 56 ist eine Klinge 58 bereitgestellt, die in Richtung des Doppelpfeils 57 auf die Laminierfolie 41 zu, in die Laminierfolie 41 hinein und von ihr weg bewegbar ist. Eine entsprechende Positionierung der Klinge 58 beim Schneiden in die Laminierfolie 51 hinein ist als gestrichelte Darstellung 58' gezeigt. Um den Schneidkasten 56 an unterschiedliche Dicken D der Laminierfolie 51 anzupassen, ist es hier nicht notwendig, den Schneidkasten 56 selber von der Oberfläche der Laminierfolie weg oder auf sie zu zubewegen. Es reicht hierbei aus, entsprechend der Vorgaben durch die Ansteuerungseinheit 18 die Klinge 58, 58' jeweils weiter in Richtung Trägerfolie 40 zu bewegen oder entsprechend kürzer. Bei einer entsprechenden Gewährleistung, dass die Trägerfolie 40 immer eine vordefinierte Dicke aufweist, ist es auch möglich, in einer besonders einfachen Ausführungsform immer exakt die gleiche Schneidlänge in Richtung des Doppelpfeils 57 der Klinge 58 zu verwenden, so dass unabhängig von der Dicke D der Laminierfolie 41 die Klinge 58 in der Position 58` immer genau bis zur Trennschicht 42 der Verbundfolie 10 eindringt. Auch auf diese Weise können sicher in Querrichtung einzelne Bereiche der Laminierfolie 41 so voneinander getrennt werden, dass diese einzeln auf den Bogen 4 übertragen werden können.

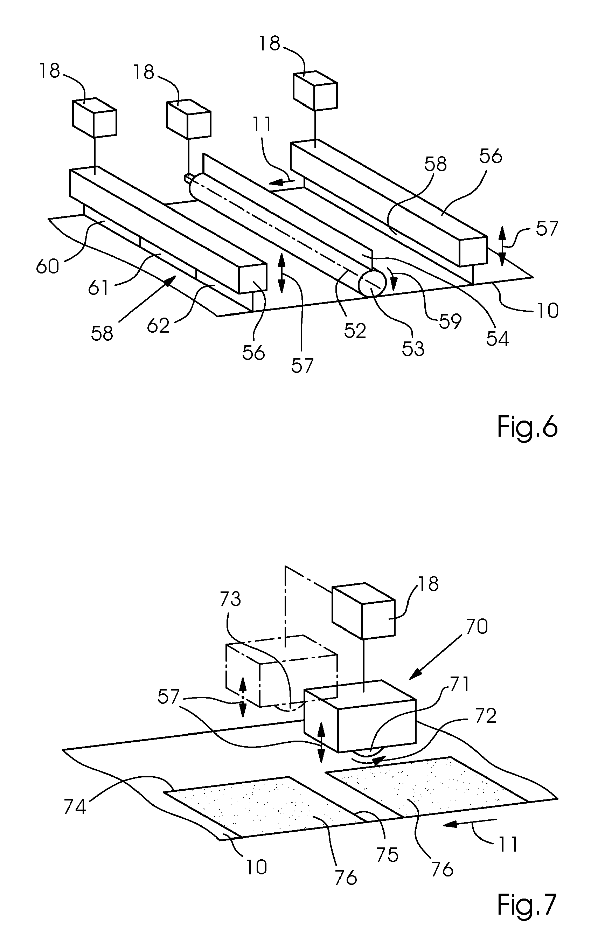

Die Figur 6 zeigt eine perspektivische Aufsicht auf die alternativen Schneideinrichtungen 17', 17", wie sie in der Figur 5 beschrieben wurden. Gleiche Elemente sind hier mit gleichen Bezugszahlen versehen.

Zusätzlich zu den beiden schon oben beschriebenen alternativen Ausführungsformen der Schneideinrichtung 17', 17" ist hier auch noch eine weitere mögliche Ausführungsform eines Schneidkastens 56 dargestellt. Dieser weitere Schneidkasten 56 kann eine modular ausgebildete Klinge 58 aufweisen, die einzelne Klingenmodule 60, 61, 62 umfasst, die gemäß den Ansteuerungssignalen aus der Ansteuerungseinheit 18 unabhängig voneinander so in die Laminierfolie 41 eindringen können, dass unterschiedliche Längen von Laminierfolie 41 in Querrichtung zur Transportrichtung 11 quergeschnitten werden können.

Die Figur 7 zeigt eine mögliche Ausführungsform einer Schneideinrichtung 17 als Schneidkasten 70, welcher zum Längschneiden der Laminierfolie 41 eingesetzt werden kann. Dieser Schneidkasten 70 kann bevorzugt zusätzlich zu den Schneidorganen 17', 17'', wie sie in den Figuren 5 und 6 dargestellt sind, eingesetzt werden. Sind bereits Schnitte 75 quer zur Ausbreitungsrichtung der Verbundfolie 10 in die Transferfolie 41 eingeschnitten, so können durch Längsschnitte 74 einzelne abgetrennte Segmente 76 der Laminierfolie 41 erzeugt werden, welche als solche einzeln je nach Beaufschlagung mit Klebstoff auf die Oberfläche des Bedruckstoffes 4 übertragen werden. Hierzu wird wiederum der Schneidkasten 70 von einer Ansteuerungseinheit 18 angesteuert, wobei es sich insbesondere um die gleiche Ansteuerungseinheit 18 handeln kann, welche auch schon die Querschneider der Schneideinrichtung 17', 17" ansteuert.

Auch dieser Schneidkasten 70 kann ebenso, wie die in den Figuren 5 und 6 gezeigten Schneidkästen 56, mit Klingen 58 ausgerüstet sein, welche sich in Richtung 57 in die Laminierfolie 41 absenken können. Die in der Figur 7 dargestellte Ausführungsform stellt aber eine Alternative mit einer rotierenden Klinge 71 dar. Diese Klinge wird im hier dargestellten Fall in Drehrichtung 72 angetrieben, welche entgegengesetzt der Transportrichtung 11 verläuft. Hierdurch kann eine besonders hohe relative Geschwindigkeit der Klinge 71 zur Laminierfolie 41 erreicht werden. Eine Drehrichtung 72 in entgegengesetzter Richtung ist natürlich auch denkbar. Auch diese Klinge kann wiederum in Richtung des Doppelpfeils 57 in die Laminierfolie 41 absenkbar oder aus ihr heraus bewegbar sein. Nur durch solche möglichen Bewegungen kann eine Segmentierung der Laminierfolie 41 zu Laminiersegmenten 76, welche durch Querschnitte 75 und Längsschnitte 74 gebildet werden, erreicht werden.

In einer weiteren Ausführungsform ist es durchaus vorgesehen, dass mehrere Schneidkästen 70 quer zur Transportrichtung 11 nebeneinander angeordnet sind. Auf diese Weise können gleichzeitig mehrere Längsschnitte 74 realisiert werden. Alternativ dazu kann der Schneidkasten 70 selber quer zur Transportrichtung 11 der Verbundfolie 10 beweglich ausgeführt sein. In dem hier dargestellten Fall ist ein weiterer Schneidkasten 70 mit einer weiteren rotierenden Klinge 73 neben dem ersten Schneidkasten 70 skizzenhaft dargestellt.

Wie beschrieben, können also mittels der Schneideinrichtungen 17', 17" der Figuren 5 und 6 Querschnitte 75 in die Laminierfolie 41 eingebracht werden. Mittels eines anschließenden Schneidkastens 70 oder eines vorangestellten Schneidkastens 70 können zusätzlich zu den Querschnitten 75 Längsschnitte 74 erzeugt werden. Mittels einer Ansteuerungseinheit 18 kann die Frequenz, mit der die einzelnen Klingen 54, 58, 71, 73 in Richtung des Doppelpfeils 57 bewegt werden bzw. die Winkelgeschwindigkeit des Schneidzylinders 53 so modifiziert werden, dass die einzelnen Längs- und Querschnitte 74, 75 aneinander angepasst werden, so dass sich einzelne Laminiersegmente 76 innerhalb der Laminierfolie 41 ergeben, welche von der restlichen Laminierfole 41 getrennt sind.

In den unterschiedlichen Alternativen, welche in der Figur 1 und in den Figuren 2 und 3 dargestellt sind, kann dann entweder auf die einzelnen Laminiersegmente 76 oder auf den diesen Laminiersegmenten 76 zugeordneten Bereiche des Bogens 4 eine Kleberschicht aufgebracht werden. Anschließend wird der Bogen 4 gemeinsam mit der entsprechend präparierten Verbundfolie 10 durch den Laminierspalt 12 hindurch transportiert. Durch den aufgebrachten Kleber und ggf. mittels Unterstützung durch einen entsprechenden Anpressdruck innerhalb des Laminierspalts 12 werden die einzelnen Laminiersegmente 76, welche sich ggf. auch über die gesamte Breite der Verbundfolie 10 erstrecken können, von der Verbundfolie 10, d. h. von der Trägerfolie 40, abgehoben und auf die Oberfläche des Bogens 4 übertragen.

Der so wengistens teillaminierte Bogen 4 kann dann weiteren Bearbeitungseinrichtungen innerhalb der Laminiervorrichtung 1 zugeführt werden. Insbesondere kann anschließend ein Trocknungs- oder Heizwerk bereitgestellt werden, welches die Anhaftung der Laminierfolie 41 bzw. der Laminiersegmente 76 auf dem Bogen 4 noch weiter unterstützt.

### Bezugszeichenliste

- 1: Laminiervorrichtung
- 2: Auftragswerk
- 3, 20, 30: Laminierwerk
- 4: Bogen
- 5: Richtung
- 6: Druckspalt
- 7: Gummituchzylinder
- 8: Gegendruckzylinder
- 9: Transferzylinder
- 10: Verbundfolie
- 11: Bewegungsrichtung
- 12: Laminierspalt
- 13: Umlenkrollen
- 14: Vorratsrolle
- 15: Sammelrolle
- 16: Plattenzylinder
- 17, 17', 17": Schneideinrichtung
- 18: Ansteuerungseinheit
- 19: Laminierzylinder
- 21, 31: Auftragswerk
- 22, 32: Auftragswalze
- 23, 33: Klebervorrat
- 40: Trägerfolie
- 41: Laminierfolie
- 42: Trennschicht
- D: Dicke
- 50: Gegendruckrollen
- 51: Schneidorgan
- 52: Achse
- 53: Schneidzylinder
- 54: Klinge
- 55: Doppelpfeil
- 56: Schneidkasten
- 57: Doppelpfeil
- 58, 58': Klinge
- 59: Drehrichtung
- 60, 61, 62: Klingenmodul
- 70: Schneidkasten
- 71, 73: Klinge
- 72: Drehrichtung
- 74, 75: Schnitte
- 76: Laminiersegmente

## Patentansprüche

1. Verfahren zum Laminieren von Substrat (40) mit einem Laminierwerk (2, 20, 30, 102), wobei das Substrat (40) dem Laminierwerk (2, 20, 30, 102) zugeführt wird, das Laminierwerk (2, 20, 30, 102) wenigstens einen Laminierzylinder (19) und einen Gegendruckzylinder (8) umfasst, welche gemeinsam einen Laminierspalt bilden, dem Laminierspalt (12) eine Laminierfolie (41) zugeführt wird, die gemeinsam mit dem Substrat (4) durch den Laminierspalt (12) geführt wird, wobei im Laminierspalt (12) die Laminierfolie (41) unter Druck auf das Substrat (4) übertragen wird, wobei die Laminierfolie (41) auf einer Trägerfolie (40) bereitgestellt ist, die zusammen eine Verbundfolie (10) bilden, welche auf einer Vorratsrolle (14) bereitgestellt ist, und wobei die Laminierfolie (41) gemeinsam mit der Trägerfolie (40) durch den Laminierspalt (12) transportiert wird, im Laminierspalt (12) die Laminierfolie (41) von der Trägerfolie (40) getrennt wird und zumindest bereichsweise auf die Oberfläche des Substrats (4) übertragen wird, und wobei
die verbrauchte Verbundfolie (10) einer Foliensammelrolle (15) zugeführt wird,
**dadurch gekennzeichnet,**
**dass** eine Kleberschicht zumindest bereichsweise auf das Substrat (4) und/oder die Oberseite der Laminierfolie (41) aufgetragen wird bevor es, bzw. sie in den Laminierspalt (12) transportiert wird und
die Laminierfolie (41) durch die Klebkraft der Kleberschicht zumindest bereichsweise von der Trägerfolie (40) auf die Oberfläche des Substrats (4) übertragen wird, wobei die Laminierfolie (41) vor dem Einlauf der Verbundfolie (10) und den Laminierspalt (12) quer und/oder längs geschnitten wird, so dass ein so ausgeschnittener Bereich der Laminierfolie (41) auf das Substrat (4) übertragen wird.

2. Verfahren nach Anspruch 1,
**dadurch gekennzeichnet,**
**dass** als Laminierfolie (41) eine vernetzte, stabile, selbsttragende Folie verwendet wird.

3. Vorrichtung zur Durchführung eines Verfahrens nach wenigstens einem der vorigen Ansprüche, mit einem Laminierwerk (2, 20, 30, 102), umfassend einen Laminierzylinder (19) und einen Gegendruckzylinder (8), die gemeinsam einen Laminierspalt (12) bilden, wobei eine Laminierfolie (41) bereitgestellt ist, die gemeinsam mit einem Substrat (4) durch den Laminierspalt (12) geführt wird um dort die Laminierfolie (41) wenigstens bereichsweise auf das Substrat (4) zu übertragen,
**dadurch gekennzeichnet,**
**dass** dem Laminierspalt (12) ein Auftragswerk (2, 21, 31) zum Kleberauftrag auf das Substrat (4) und/oder die Laminierfolie (41) vorgeordnet ist,
das Laminierwerk (2, 20, 30, 102) wenigstens eine Vorrats- oder Sammelrolle (14, 15) zur Bereitstellung bzw. Aufnahme einer Verbundfolie (10) aufweist, und
die Verbundfolie (10) wenigstens aus der Laminierfolie (41) und einer Trägerfolie (40) aufgebaut ist, wobei die Laminierfolie (41) im Laminierspalt (12) unter Druck von der Trägerfolie (40) zumindest in den mit Kleber beaufschlagten Bereichen (76) auf den Bedruckstoff übertragen wird, und dass eine Schneideinrichtung (17, 17', 17") zum Schneiden der Laminierfolie (41) zwischen der Vorratsrolle (14) und dem Laminierspalt (12) bereitgestellt ist.

4. Vorrichtung nach Anspruch 3,
**dadurch gekennzeichnet,**
**dass** eine Ansteuerungseinheit (18) zur Ansteuerung der Schneideinrichtung (17, 17', 17") vorgesehen ist, die Informationen über die Beschaffenheit und/oder Dicke (D) der Laminierfolie (41) erhalten kann und geeignet ist die Schneidtiefe der Schneideinrichtung (17, 17', 17") in Abhängigkeit von der Beschaffenheit und/oder Dicke (D) der Laminierfolie (41) so anzusteuern, dass die Laminierfolie (41) so geschnitten wird, dass die Trägerfolie (40) selber durch das Schneiden praktisch nicht beschädigt wird.

## Claims

1. Method for laminating a substrate (40) using a laminating unit (2, 20, 30, 102) which is fed the substrate (40) and comprises at least a laminating cylinder (19) and a counterpressure cylinder (8), the two cylinders (19, 8) together forming a laminating nip (12), wherein a laminating film (41) is fed to the laminating nip (12) and passed through the laminating nip (12) together with the substrate (4),
wherein in the laminating nip (12), the laminating film (41) is transferred to the substrate (4) under pressure,
wherein the laminating film (41) is provided on a carrier film (40) that forms a compound film (10) with the laminating film (41), the compound film (10) provided on a supply reel (14), and
wherein the laminating film (41) is transported through the laminating nip (12) together with the carrier film (40), is separated from the carrier film (40) in the laminating nip (12), and is transferred to the surface of the substrate (4) at least in sections, and
wherein the used compound film (10) is fed to a film collecting reel (15),
**characterized in**
**that** a layer of glue is applied at least to sections of the substrate (4) and/or of the upper side of the laminating film (41) before the respective one of the two is transported into the laminating nip (12), and
**that** the laminating film (41) is transferred at least from sections of the carrier film (40) at least to sections of the surface of the substrate (4) due to the adhesive force of the layer of glue, wherein before the compound film (10) enters the laminating nip (12), the laminating film (41) is cut crossways and/or longitudinally, causing a region of the laminating film (41) that has thus been cut out to be transferred to the substrate (4).

2. Method recited in claim 1,
**characterized in**
**that** the laminating film (41) is a cross-linked, stable, self-supporting film.

3. Device for implementing a method according to at least one of the preceding claims including a laminating unit (2, 20, 30, 102) that comprises a laminating cylinder (19) and a counterpressure cylinder (8), the two cylinders together forming a laminating nip (12), wherein a laminating foil (41) is provided and is guided through the laminating nip (12) together with a substrate (4) to transfer the laminating film (41) to the substrate (4) at least in sections,
**characterized in**
**that** an application unit (2, 21, 31) for applying glue to the substrate (4) and/or to the laminating foil (41) is provided upstream of the laminating nip (12),
**that** the laminating unit (2, 20, 30, 10) includes at least one supply or collecting reel (14, 15) for respectively supplying and collecting a compound film (10), and
**that** the compound film (10) at least consists of the laminating film (41) and a carrier film (40), wherein in the laminating nip (12), the laminating film (41) is transferred under pressure to the printing substrate at least in the regions (76) that have received the glue, and
**that** a cutting device (17, 17', 17") for cutting the laminating film (41) is provided between the supply reel (14) and the laminating nip (12).

4. Device according to claim 3,
**characterized in**
**that** a first actuating unit (18) for actuating the cutting device (17, 17', 17") is provided, wherein the first actuating unit (18) may receive information on the properties and/or thickness (D) of the laminating film (41) and is suitable to control the cutting depth of the cutting device (17, 17', 17") as a function of the properties and/or thickness (D) of the laminating film (41) in such a way that the laminating film (41) is cut in such a way that the carrier film (40) itself is virtually not damaged by the cutting process.

## Revendications

1. Procédé de laminage de substrat (40) comprenant un groupe de laminage (2, 20, 30, 102), le substrat (40) étant amené au groupe de laminage (2, 20, 30, 102), le groupe de laminage (2, 20, 30, 102) comprenant au moins un cylindre de laminage (19) et un cylindre de contre-pression (8), qui forment ensemble une fente de laminage, un film de laminage (41) étant amené à la fente de laminage (12) lequel est guidé conjointement avec le substrat (4) à travers la fente de laminage (12), dans la fente de laminage (12), le film de laminage (41) étant transféré sous pression sur le substrat (4), le film de laminage (41) étant préparé sur un film support (40), qui forment ensemble un film composite (10) qui est préparé sur un bobine de réserve (14), et le film de laminage (41) étant transporté conjointement avec le film de support (40) à travers la fente de laminage (12), le film de laminage (41) étant séparé dans la fente de laminage (12) du film support de support (40) et étant au moins transféré par zone sur la surface du substrat (4) et le film composite consommé (10) étant amené à une bobine de collecte de film (15),
**caractérisé en ce**
**qu'**une couche de colle est appliquée au moins par zone sur le substrat (4) et/ou la face supérieure du film de laminage (41) avant le transport dans la fente de laminage (12) et
le film de laminage (41) est transféré par la force d'adhérence de la couche de colle au moins par zone du film support (40) à la surface du substrat (4), le film de laminage (41) étant coupé transversalement et/ou longitudinalement avant l'introduction du film composite (10) dans la fente de laminage (12) de sorte qu'une zone découpée du film de laminage (41) est transférée sur le substrat (4).

2. Procédé selon la revendication 1
**caractérisé en ce**
**qu'**un film stable, autoporteur réticulé est utilisé comme film de laminage.

3. Dispositif pour mettre en oeuvre un procédé selon au moins l'une des revendications précédentes, avec un groupe de laminage (2, 20, 30, 102), comprenant au moins un cylindre de laminage (19) et un cylindre de contre-pression (8), qui forment ensemble une fente de laminage, un film de laminage (41) étant préparé pour être guidé conjointement avec un substrat (4) à travers la fente de laminage (12)
**caractérisé en ce**
**qu'**un groupe applicateur (2, 21, 31) est disposé en amont de la fente de laminage (12) pour l'application de colle sur le substrat (4) et/ou sur le film de laminage (41),
le groupe de laminage (2, 20, 30, 102) présente au moins une bobine de réserve ou de collecte (14, 15) pour la préparation ou la réception d'un film composite (10), et
le film composite (10) étant au moins composé du film de laminage (41) et d'un film support (40), le film de laminage (41) étant transféré au moins dans les zones enduites de colle dans la fente de laminage (12) sous pression depuis le film support (40) au moins sur le matériau d'impression (40) et en ce qu'un dispositif de coupe (17, 17', 17") est prévu pour couper le film de laminage (41) entre la bobine de réserve (14) et la fente de laminage (12).

4. Dispositif selon la revendication 3,
**caractérisé en ce**
**qu'**il est prévu une unité de commande (18) pour entraîner le dispositif de coupe (17, 17', 17"), qui peut recevoir des informations sur la nature et/ou l'épaisseur (D) du film de laminage (41) et est appropriée pour commander la profondeur de coupe du dispositif de coupe (17 , 17', 17") en fonction de la nature et/ou l'épaisseur (D) du film de laminage (41) de sorte que le film de laminage (41) est découpé de manière à ne pratiquement pas endommager le film support pendant la coupe.
